# EUROPEAN PATENT APPLICATION

(11) **EP 4 704 405 A1**
(43) Date of publication of application: **04.03.2026**
(21) Application number: 25196352.6
(22) Date of filing: 18.08.2025
(51) Int. Cl.: H04L 61/103, H04L 101/622, H04L 101/668

(54) **NETWORK NODE AND NETWORK SYSTEM CONFIGURED TO DETERMINE AN IP CONFIGURATION FOR THE NETWORK NODE**

(30) Priority: 02.09.2024 EP 24197946
(71) Applicant: Koninklijke KPN N.V., 3072 AP Rotterdam (NL)
(72) Inventor: KORTEKAAS, Bartholomeus Johannes, 3072 AP Rotterdam (NL); MONDT, Bastiaan Peter, 3072 AP 's Gravenhage (NL)
(74) Representative: De Vries & Metman

(57) **Abstract**

The disclosure pertains to a network node configured to determine an Internet Protocol, IP, configuration, or a part thereof, for an IP network connection. The network node may be configured to receive an Open Systems Interconnection, OSI, -layer-2 message comprising one or more information elements. The OSI-layer-2 message may be multicast message or a broadcast message. The network node may further be configured to run an IP configuration determination process using one or more of the one or more information elements of the OSl-layer-2 message. The one or more information elements from the OSI-layer-2 message serve as input for the IP configuration determination process to determine an IP configuration for the network node to be reachable over the IP network connection. The disclosure also pertains to a network system comprising one or more of such network nodes.

## Description

### TECHNICAL FIELD

The present disclosure relates to a network node and network system configured to determine an IP configuration for the network node. The network node may need to be reachable in an IP-based network, such as an IP backbone, through an IP network connection.

### BACKGROUND

Internet Protocol, IP, addressing is a fundamental aspect of networking that enables devices to communicate over a network, such as the internet or within private networks. An IP address is a unique identifier assigned to each device connected to a network, allowing it to send and receive data. There are two main versions of IP addresses: IPv4 and IPv6. IPv4 addresses are 32-bit numbers typically expressed in decimal format as four octets separated by periods. Due to the limited number of IPv4 addresses, IPv6 was developed, offering a 128-bit address space expressed in hexadecimal format, providing a virtually limitless number of addresses.

Dynamic Host Configuration Protocol, DHCP, is a network management protocol used to automate the process of assigning IP addresses to devices on a network. When a device connects to a network, it sends a broadcast request for an IP address. A DHCP server responds to this request by assigning an available IP address from a predefined range along with other network configuration parameters such as the subnet mask and default gateway. This set of configuration parameters is known as IP configuration. An IP configuration involves necessary parameters for a device to communicate over a network. It includes at least the IP address, a subnet mask, which determines the network's size and helps in routing traffic, and a default gateway, which serves as the access point for connecting to an external network. These parameters ensure that data can be correctly routed to and from the device.

This automated DHCP simplifies network management by reducing the need for manual configuration and minimizing the risk of IP address conflicts. Using DHCP offers several advantages, including ease of administration, scalability, and flexibility. Network administrators can manage IP address assignments centrally, making it easier to accommodate changes in network topology or device count. DHCP is particularly beneficial in environments with a large number of devices, where manual IP address management would be cumbersome. However, DHCP relies on the availability of a DHCP server, so network connectivity issues or server failures can disrupt IP address assignments. Still further, in some cases, DHCP servers are not available for a longer time or are not available at all. Manual provision of IP configurations may be costly, because of the number of devices, and/or unsuitable because of the location of the device, for example.

### SUMMARY

The inventors have considered that there exists a need in the art to determine an IP configuration for a network node in the, possibly temporary, absence of a DHCP server.

One aspect of the disclosure pertains to a network node configured to determine an Internet Protocol, IP, configuration, or a part thereof, for an IP network connection. The network node may be configured to receive an Open Systems Interconnection, OSI, -layer-2 message comprising one or more information elements. The OSI-layer-2 message may be a multicast message or a broadcast message.

The network node may further be configured to run an IP configuration determination process using one or more of the one or more information elements of the OSI-layer-2 message. The one or more information elements from the OSI-layer-2 message serve as input for the IP configuration determination process to determine an IP configuration for the network node to be reachable over the IP network connection.

Another aspect of the disclosure involves a network system comprising one or more network nodes as disclosed herein, such as in the previous paragraph, and at least one sender system. The sender system may comprise at least an IP node, such as an IP router, wherein the IP node is configured to send an OSI-layer-2 message to trigger determination of the IP configuration in the one or more network nodes.

Another aspect of the disclosure involves a sender system for such a network system, such as an IP node (e.g. an IP router) and/or a computer system.

Another aspect of the disclosure relates to a method determining an Internet Protocol, IP, configuration for an IP network connection of a network node. The method may comprise the step of receiving an Open Systems Interconnection, OSI, -layer-2 message comprising one or more information elements. The method may further comprise the step of using one or more of the one or more information elements of the OSI-layer-2 message to determine an IP configuration for the network node to be reachable over the IP network connection.

Yet another aspect of the disclosure pertains to a computer program comprising one or more software code portions configured to, when run on a system, such as a network node as disclosed herein, to execute the method as disclosed herein and to a computer program product storing one or more of such software code portions.

The disclosed network node, network system and method enable network nodes to determine an IP configuration in the, possibly temporary, absence of an DHCP server by determining the IP configuration (or at least a part thereof) based on one or more information elements from the OSI-layer-2 message, such as an OSI-layer-2 broadcast message. The IP configuration determination process may use information stored in the network node, for example from a lookup table, that associates information elements from the OSI-layer-2 message with parameters, such as a subnet mask, for the IP configuration. The IP configuration determination process may, in one embodiment, determine at least one parameter of the IP configuration from a calculation in and/or search in storage of the network node, i.e. not obtaining the parameter directly from the OSl-layer-2 message.

The network node may provide further network access to further devices, for example using LoRaWAN^{™}, BlueTooth^{™}, WiFi direct, or other wireless technologies. The network node may also be an IP client, such as an IoT client, for example a fire alarm or other sensor device. The disclosed network node and method are particularly useful for network nodes that are deployed at some scale and not always easy to reach for manual IP configuration, such as fire alarms in office buildings usually fixed to (wired connections in) the ceiling.

In one embodiment, the network node is configured to receive the OSl-layer-2 message from a plurality of sender systems. The IP configuration determination process may be configured to determine a different IP configuration dependent on the sender system of the plurality of sender systems from which the OSI-layer-2 message is received.

The embodiment allows provisioning of the network nodes with the same, default, information, such as the same lookup table, while allowing determination of a specific IP configuration dependent on the sender system, such as dependent on at least one information element IE contained in the OSI-layer-2 message. This allows an operator to pick an arbitrary network node from a stock of network nodes and install the network node in the network system to determine its own IP configuration.

In one embodiment, the OSl-layer-2 message comprises an Address Resolution Protocol, ARP, broadcast message, and the network node may be configured to run the IP configuration determination process to determine at least one of an IPv4 address, a subnet mask and a sender protocol address for the network node using the one or more of the one or more information elements of the ARP broadcast message as input for the IP configuration determination process.

The inventors have considered that network nodes typically run an Address Resolution Protocol, even in the absence of a valid IP configuration, wherein the network node listens to ARP broadcast messages. While ARP is conventionally use to determine a hardware address, such as the Media Access Control, MAC, address of the network node with an existing IP configuration, the inventors have found that the ARP broadcast message may also be used by the network node to determine the IP configuration.

It should be noted that other OSl-layer-2 messages than ARP broadcast messages may be used to the same effect, such as other OSl-layer-2 broadcast messages or an IPv6 Neighbor Solication message.

In one embodiment, the IP configuration determination process of the network node may be configured to determine at least one of an IP address, a subnet mask and a sender system address, for the IP configuration of the network node based on one or more information elements of the OSl-layer-2 message. The sender system address may be a sender system IP address and/or a sender system MAC address. The embodiment allows the determination of the most relevant parameter(s) of the IP configuration from the OSI-layer-2 message.

In one embodiment, the network node may be configured to determine the subnet mask of the IP configuration from the IP configuration determination process based on at least one of an IP address and a sender system protocol address or sender system hardware address comprised in the OSI-layer-2 message. Since an IP address and a sender system address (e.g. a router address, such as a router IP address and/or a router MAC address) may be part of the OSI-layer-2 message (e.g. the ARP broadcast message), such information can be readily obtained and stored as part of the IP configuration in the network node. The network node may (pre)store subnet mask information in association with a plurality of IP addresses and/or sender system addresses (for example in a lookup table), allowing the IP configuration determination process to determine the associated subnet mask.

The inventors have considered further IP configuration determination processes to determine the IP address for the network node. For example, a calculation process may be used when multiple network nodes reside behind a sender system.

In one embodiment, the IP configuration determination process of the network node comprises a calculation process to determine the IP address from one or more of the information elements of the OSl-layer-2 message. The calculation process may comprise calculating the IP address of the network node from a sender system protocol address, such as a router IP address. The calculation may involve adding or subtracting a number from the sender system protocol address to obtain an IP address for the network node within the allocated IP address range.

In one embodiment, the IP configuration determination process of the network node comprises a calculation process to determine the IP address from one or more of the information elements of the OSl-layer-2 message. The calculation process may comprise calculating the IP address of the network node from at least one of at least a part of the hardware address of the network node (that is already available at the network node) and at least a part of the hardware address of the sender system (that may be contained in the OSI-layer-2 message received by the network node). For example, the three or four last digits of the MAC address of the network node and/or the three or four last digits of the MAC address of the sender system may be used to calculate the applicable IP address for the network node.

In one embodiment, the IP configuration determination process of the network node comprises a calculation process to determine the IP address from one or more of the information elements of the OSl-layer-2 message. The calculation process may comprise calculating the IP address of the network node pseudo-randomly from the sender system protocol address. Optionally, the network node is configured to execute an address conflict detection process for the pseudo-random calculated IP address to avoid the use of the same IP address in relation the sender system, such as an IP router.

In one embodiment, the network node is configured to run the IP configuration determination process only in response to detecting at least one of a predetermined sender hardware address and sender protocol address as an information element in the OSI-layer-2 message. The embodiment allows the network node to filter appropriate OSI-layer-2 messages to trigger the IP configuration process from other OSl-layer-2 messages in the network. For example, an ARP broadcast message from another network node in the network should not trigger the IP configuration determination process, whereas an ARP broadcast message from a sender system, such as an IP router, may trigger the IP configuration determination process.

In one embodiment, the network node is configured to run the IP configuration determination process only in response to detecting that the network node does not have a valid IP configuration. This embodiment enables the network node, for example, to distinguish between ARP broadcast messages that should only result in returning the MAC address of the network node (if the network node has a valid IP configuration, so that no IP configuration determination process is required) and ARP broadcast messages that should trigger the IP configuration determination process (if the network node does not have a valid IP configuration).

In one embodiment, the network node is configured to respond to the OSI-layer 2 message with a response message to the sender system, wherein the response message comprises at least a hardware address of the network node. The embodiment allows the network node to also return its MAC address to the sender system when the OSI-layer-2 message triggers the IP configuration determination process, such as for an ARP layer-2 broadcast message.

As mentioned above, another aspect of the disclosure involves a network system comprising one or more network nodes and a sender system. The sender system may comprise one or more IP nodes, such as IP routers. The sender system may also include one or more computer systems to initiate data transfer, e.g. by means of an Internet Control Message Protocol, ICMP, message, such as a ping message. The IP node may send the OSI-layer-2 message in response to receiving the request to initiate the data transfer, such as the ICMP message, for example from a computer system.

In one embodiment, the sender system of the network system is further configured to run a discovery protocol to discover presence of at least one of network nodes and IP nodes. The sender system allows detection of the presence of a network node for which the IP configuration needs to be established by means of sending the OSI-layer-2 message.

In one embodiment, the network system comprises the IP node and a remote computer system configured to initiate a data request for the network node. The remote computer system may be configured to run the discovery protocol and to transmit the data request to the IP node, such as an IP router. Optionally, the data request is sent in response to detecting presence of the IP node. Detecting the presence of the IP node may increase the frequency for sending the data request from the remote computer system to the IP node, thereby triggering sending of the OSI-layer-2 message, such as a broadcast message, since detecting of the presence of the IP node may announce connection of a network node in the near future.

In one embodiment, the network nodes comprise network nodes attached to a base station infrastructure of a telecommunications network. The network nodes may provide a wireless network interface for Internet-of-Things devices, such as a Long-Range, Low Power, LoRa, network. Each network node is connected via an associated IP node (e.g. an IP router) to an IP backbone network. In such a use case, a DHCP server may not be available and the number of network nodes may be considerable. The network nodes may be attached to a tower infrastructure of the base station, making it difficult to manually enter the IP configuration.

In one embodiment of the method, the OSl-layer-2 message comprises an Address Resolution Protocol, ARP, broadcast message and the method comprises the step in the network node of running an IP configuration determination process to determine at least one of an IPv4 address, a subnet mask and a sender protocol address for the network node using the one or more of the one or more information elements of the ARP broadcast message as input for the IP configuration determination process.

In one embodiment of the method, the method may further comprise the step in the network node of determining at least one of an IP address, a subnet mask and a sender system address, for the IP configuration of the network node based on one or more information elements of the OSl-layer-2 message. The method may further comprise the step of determining the subnet mask of the IP configuration from the IP configuration determination process based on at least one of an IP address and a sender system protocol address or sender system hardware address comprised in the OSI-layer-2 message.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is an embodiment of a network system comprising a network node and a sender system;
FIG. 2 is another embodiment of a network system comprising a plurality of network nodes and sender systems;
FIG. 3 is a schematic illustration of an embodiment of a network node;
FIG. 4 is a flow chart with some steps of determining an IP configuration for a network node;
FIG. 5 is a time chart with communications for a network node and sender system for an Address Resolution Protocol, ARP, use case; and
FIG. 6 is a block diagram of a processing system for a network node or computer system of a sender system or a part thereof.

### DETAILED DESCRIPTION OF THE DRAWINGS

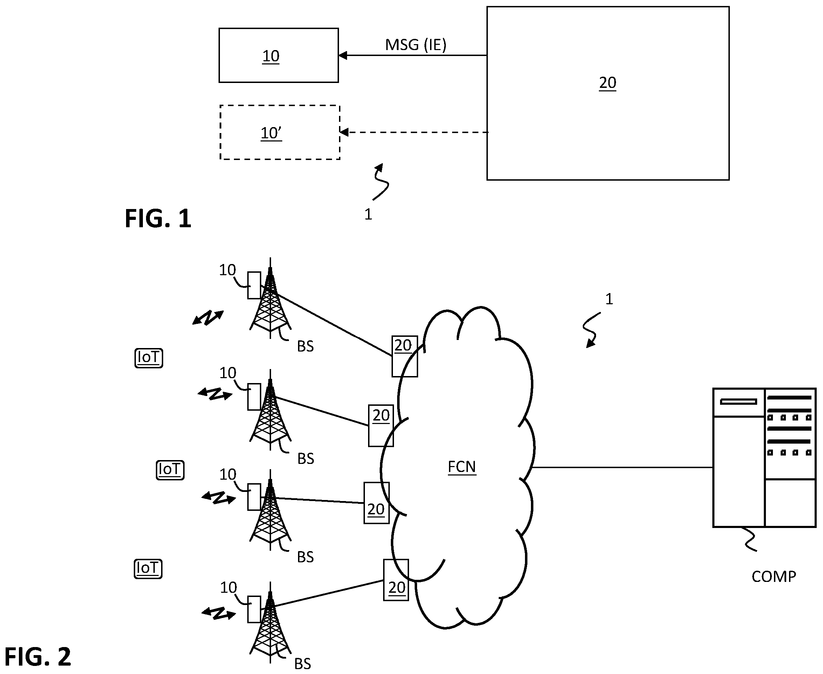

FIG. 1 is a schematic illustration of an embodiment of a network system 1 comprising at least one network node 10 and a sender system 20. The sender system 20 may be connected to one or more further network nodes 10' as schematically shown by the dashed box. The sender system 20 may comprise an IP node, such as an IP router. The network node 10 does not have an IP configuration or does not have a valid IP configuration.

The sender system 20 is configured to transmit an Open System Interconnection, OSI, - layer-2 message MSG, such as OSI-layer-2 broadcast message, over an IP network. The network node 10 is configured to receive and process the message MSG. The message MSG may comprise one or more information elements, IE, that can be used by the network node 10 to determine an IP configuration, or a part thereof.

FIG. 2 is a schematic illustration of another embodiment of a network system 1 comprising a plurality of network nodes 10 and a plurality of IP nodes, such as IP routers, 20 in a one-to-one configuration. The embodiment further comprises a computer system COMP. In one embodiment, the computer system COMP may be considered to constitute a part of the sender system 20.

The computer system COMP is connected to a plurality of IP nodes over an IP core network, which is a fixed IP core network FCN. The IP core network does not contain a DHCP server or the DHCP server is not available.

The possible networks (segmenting and addressing) may be known by the computer system COMP and the network nodes 10.

The fixed core network FCN is used by a plurality of base station towers BS of some telecommunications network as well. The network nodes 10 are attached to the base station towers BS at some height, so that it is not suitable to manually enter an IP configuration for each of plurality the network nodes 10. It should be appreciated that the number of network nodes 10 may be high, such as 1000 or more.

Antennas from the base station BS may provide a wireless access interface for mobile stations (not shown) communications of which may be routed via the fixed core network FCN. A network node 10 may provide for a different wireless access network, such as a Low Range - Low Power, LoRa, network providing communications for Internet-of-Things, loT, devices, shown in FIG. 2. If the network nodes 10 have a valid IP configuration, these network nodes 10 can be reachable over the IP network FCN.

Data transmission to and from the network nodes 10 may be accomplished using the computer system COMP in FIG. 2. For example, data transmission for the network nodes 10 may be initiated from the computer system COMP. Network nodes 10 may also send information to the computer system COMP. Such data transmissions occur via the IP nodes 20. The data transmissions may include data from the loT devices. For data transmissions to occur, each of the network nodes 10 benefit from an IP configuration to establish and IP connection with a corresponding IP node 20.

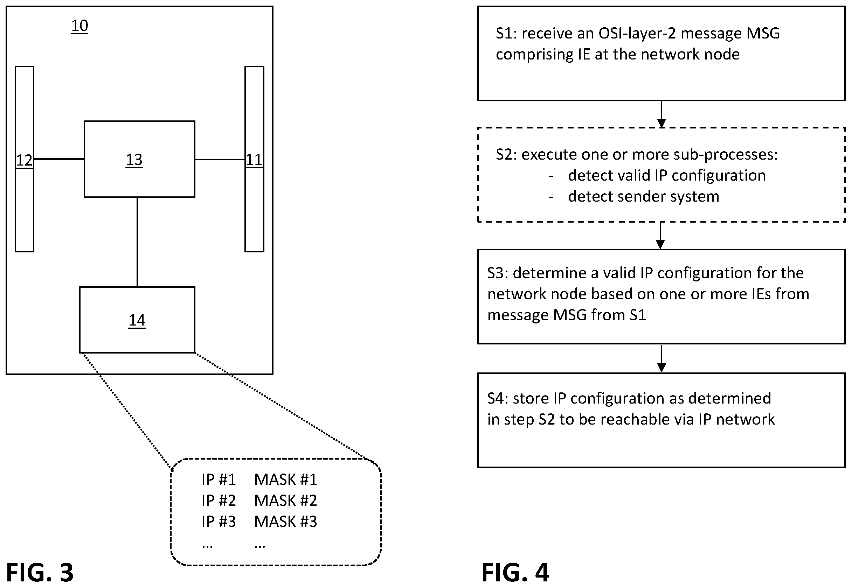

An embodiment of a network node 10 and a method to obtain an IP configuration, or part thereof, will be described with reference to FIGS. 3 and 4.

FIG. 3 is a schematic illustration of an embodiment of a network node 10. The network node 10 comprises a network connection interface 11, such as a network card, for an IP network and may comprise another interface 12, such as an interface towards the LoRa network in the network system 1 of FIG. 2. The network node 10 further comprises a processing system 13 for executing processes, such as an IP configuration determination process as will be explained below in further detail. The network node 10 also comprises one or more memory or storage modules 14 comprising information to assist in determining the IP configuration, such as process code and auxiliary information, such as a lookup table, LUT, for execution in processing system 13.

The network node 10 is configured to determine IP configuration, or a part thereof, for an IP network connection with the IP node 20. The network node 10 is configured to receive an OSI-layer-2 message MSG via network interface 11 comprising one or more information elements IE. The OSl-layer-2 message MSG may be multicast message or a broadcast message.

The network node 10 is configured to run an IP configuration determination process in processing system 13 using one or more of the one or more information elements IE of the OSI-layer-2 message MSG. The one or more information elements IE from the OSI-layer-2 message MSG serve as input for the IP configuration determination process to determine an IP configuration for the network node 10 to be reachable over the IP network connection.

The network node 10 is enabled to determine an IP configuration in the absence of an DHCP server by determining the IP configuration (or at least a part thereof) based on one or more information elements IE from the OSI-layer-2 message, such as an OSI-layer-2 broadcast message. The IP configuration determination process run by processing system 13 may use information stored in the network node 10, such as in storage or memory 14, for example from a lookup table, that associates information elements IE from the OSI-layer-2 message MSG with parameters for the IP configuration. The IP configuration determination process may, in one embodiment, determine at least one parameter of the IP configuration from a calculation in and/or search in storage or memory 14 of the network node, i.e. not obtaining the parameter directly from the OSl-layer-2 message. Other parameters for the IP configuration may be obtained directly from the OSI-layer-2 message MSG, such as the IP address of the network node 10 and/or the IP address of the sender system 20 to complete the IP configuration for the network node 10.

The network node 10 is configured to receive the OSI-layer-2 message MSG from a plurality of sender systems 20. The IP configuration determination process may be configured to determine a different IP configuration dependent on the sender system 20 of the plurality of sender systems from which the OSI-layer-2 message MSG is received. This allows provisioning of network nodes 10 with the same, default, information, such as the same lookup table stored in storage/memory 14, while allowing determination of a specific IP configuration dependent on the sender system, such as based on at least one different information element IE, from a message MSG. For example, a first network node 10 may receive an OSI-layer-2 message MSG from a first sender system 20 and a second network node 10 may receive an OSl-layer-2 message from a second sender system 20. The first network node and second node contain the same lookup table associating a first parameter of an IP configuration, such as subnet mask #1, with an IP address #1 of the first sender system 20 contained in message MSG and a different first parameter of an IP configuration, such as subnet mask #2, with an IP address of the second sender system 20, contained in message MSG. The storage/memory 14 may store a table associating further subnet masks with further IP addresses of sender systems 20, as shown in FIG. 3. This allows an operator to pick an arbitrary network node 10 from a stock of network nodes and install the network node in the network system 1 to determine its own IP configuration, such as in the base station towers BS in FIG. 2.

FIG. 4 is a flowchart comprising exemplary steps for a network node to determine (part of) an IP configuration for the network node 10 to be reachable over an IP network.

In step S1, network node 10 receives an OSI-layer-2 message comprising one or more information elements IE. The information elements IE may comprise parameters that the network node 10 may use to determine one or more parameters for an IP configuration, such as the IP address, subnet mask and/or IP gateway, i.e. the IP address of the sender system 20, for example.

Optionally, the network node may run one or more sub-processes as shown by step S2 in FIG. 4.

For example, the network node 10 may detect at least one of a MAC address and an IP address of the sender system 20 in the OSI-layer-2 message. This allows the network node 10 to filter appropriate OSI-layer-2 messages to trigger the IP configuration process from other OSl-layer-2 messages in the network.

As another example, the network node 10 may detect that the network node does not have a valid IP configuration. This embodiment enables the network node 10 to trigger the IP configuration process of step S3 only when needed to obtain an IP configuration.

In step S3, the network node 10 determines a valid IP configuration based on information elements IE as received in step S1. The IP configuration determination process may be executed in processing system 13 with the assistance of information stored in storage/memory 14. For example, processing system may execute a calculation in and/or search in storage of the network node 10 based on one or more information elements IE of the OSI-layer-2 message.

In one embodiment of step S3, the IP configuration determination process of the network node 10 may be configured to determine at least one of an IP address, a subnet mask and a sender system address, for the IP configuration of the network node 10 based on one or more information elements IE of the OSl-layer-2 message. The sender system address may be an IP address and/or a MAC address of sender system 20.

In one embodiment of step S3, the IP configuration determination process of the network node 10 comprises a calculation process to determine the IP address from one or more of the information elements IE of the OSl-layer-2 message. The calculation process may comprise calculating the IP address of the network node 10 from a sender system protocol address, such as a router IP address. The calculation may involve adding or subtracting a number from the sender system protocol address to obtain an IP address for the network node within the allocated IP address range.

In one embodiment of step S3, the calculation process may comprise calculating the IP address of the network node 10 from (a part of) the hardware address of the network node (the MAC address is already available at the network node 10 and is different for each network node 10). Likewise, or in addition, a part of the hardware address of the sender system 20 (that may be contained in the OSI-layer-2 message received by the network node 10) may be used. For example, the three or four last digits of the MAC address of the network node 10 and/or the three or four last digits of the MAC address of the sender system 20 may be used to calculate the applicable IP address for the network node 10.

In one embodiment of step S3, the calculation process may comprise calculating the IP address of the network node pseudo-randomly from the sender system protocol address, e.g. the IP address of a router system 20. Optionally, the network node 10 may then execute an address conflict detection process for the pseudo-random calculated IP address to avoid the use of the same IP address in relation to the sender system 20, such as an IP router.

In step S4, the network node stores the determined IP configuration to be reachable over the IP network, such as from the sender system 20 in FIG. 1 or FIG. 2. It is noted that when the network node 10 has a valid IP configuration, this IP configuration may remain to be stored after IP traffic has been terminated.

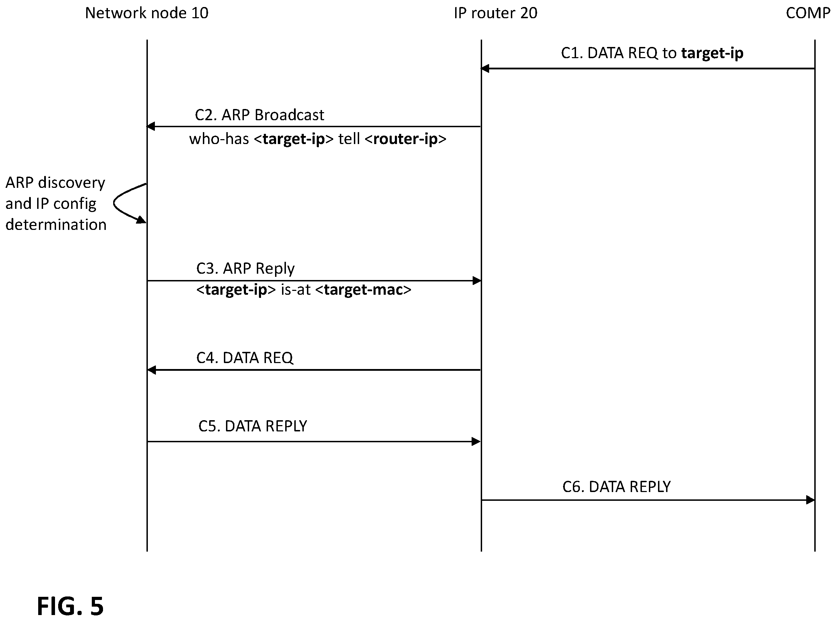

One use case for the disclosed method and network node comprises the OSI-layer-2 message being an Address Resolution Protocol, ARP, broadcast message. Such a message may be received by the network node 10 as the network node 10 may often run an ARP discovery process in the absence of a valid IP configuration. A more detailed example of some steps for such a use case is presented in FIG. 5.

In communication C1, computer system COMP initiates a data request for a particular target-IP address. The request may be an ICMP echo request, such as a PING. The target-IP address may be an IP address associated with the network node 10. In one embodiment, the target-IP address may be the IP address for the IP configuration of the network node 10.

The computer system COMP may be responsible for the initiation of IP traffic towards the network node 10 and may have prior knowledge of the available IP address range for the network nodes 10.

The computer system 10 may use one or more strategies to initiate the IP traffic. An operator may initiate the IP traffic manually once the network node 10 is connected in the network. Alternatively, the computer system COMP may automatically sweep the available target-IP address range, for example, periodically.

In one embodiment, the sender system 20, such as computer system COMP, may be configured to run a discovery protocol to discover presence of at least one of network nodes 10 and IP nodes 20. The sender system 20 allows detection of the presence of a network node 10 for which the IP configuration needs to be established by means of sending the OSI-layer-2 message. For example, in the embodiments of FIGS. 2 and 5, the sender system 20 comprises an IP node 20 and a remote computer system COMP configured to initiate a data request for the network node 10 as shown in communication C1 in FIG. 5. The remote computer system 20 may be configured to run the discovery protocol and to transmit the data request to the IP node, such as an IP router, in communication C1. The data request may be sent in response to detecting the presence of the IP node 20. Detecting the presence of the IP node 20 may increase the frequency for sending the data request from the remote computer system COMP to the IP node, thereby triggering sending of the OSI-layer-2 broadcast message, since detecting of the presence of the IP node 20 may announce connection of a network node in the near future.

For example, computer system COMP may run a status ping service sending and receiving ping messages to IP routers 20 and network nodes 10. The periodicity may be determined by the state of the connection and is controlled by a state machine per network segment. Possible states include:
- INITIAL - startup state, discover if IP router is active.
- DISCOVERED - IP router is active, checking if network node active.
- ACTIVE - IP router and network node are reachable/active.
- FAILED - IP router (and network node) not reachable/active.

For every state the ping periodicity may be more or less frequent. The process may start with all segments in INITIAL state, in which the IP router 20 is pinged. If a reply is received, the segment may be switched to DISCOVERED state in which the network node 10 is pinged intensively to aid the IP configuration determination process. Once a ping reply is received from the network node (see communication C6, described below), the segment transfers into ACTIVE state where a lower ping frequency is activated. If the IP router 20 is no longer reachable, the segment will be in FAILED state.

Communication C1 is received by the sender system 20, such as an IP router 20. The IP router is responsible for routing IP traffic between the computer system COMP and a network node. In communication C2 transmits the IP router 20 an Address Resolution Protocol, ARP, broadcast message, for example in accordance with RF 826 and associated standard mechanisms.

The IP router may contain an ARP cache storing the relationship between MAC address and IP address for connected networks. If an IP address for a network node is not stored in the cache, the IP router 20 sends out an ARP broadcast message to find out the MAC address for the network node 10. The ARP cache may store the relationship only temporarily, for example only as long as IP traffic is routed. As long as the ARP cache stores the relationship, the IP router 20 may decide not to send an ARP broadcast message as defined for communication C2.

Thus, the ARP broadcast message may be a conventional ARP broadcast message for IPv4 address resolution. Such an ARP broadcast message may contain the following information elements IE:
- Hardware Type (HTYPE): Specifies the network link protocol type, e.g., Ethernet.
- Protocol Type (PTYPE): Specifies the internetwork protocol for which the ARP request is intended, e.g., IPv4.
- Hardware Address Length (HLEN): Length of the hardware address.
- Protocol Address Length (PLEN): Length of the protocol address.
- Operation (OPER): Specifies whether the packet is an ARP request (1) or reply (2).
- Sender Hardware Address (SHA): MAC address of the IP router.
- Sender Protocol Address (SPA): IP address of the IP router, <router-ip> in FIG. 5).
- Target Hardware Address (THA): MAC address of the network node (filled in ARP reply).
- Target Protocol Address (TPA): IP address of the network node, <target-ip> in FIG. 5).
Communication C2 in FIG. 5 is a ARP broadcast request message requesting a network node 10 having the target IP address to inform the IP router 20 about the MAC address of the network node 10 (since this MAC address may not be stored in the cache of the IP router).

The network node 10 receives the ARP broadcast message in step C2 while running an ARP discovery protocol as shown in FIG. 5. The network node 10 may use one or more information elements from the ARP broadcast message to determine the IP configuration for the network node. One embodiment of such an IP configuration determination process has been described with reference to FIG. 4.

Once the network node 10 detects that it has no valid IP configuration and when a suitable ARP broadcast has been received, the network node 10 runs an IP configuration determination process to determine the IP configuration (IP address, subnet mask, IP gateway address, for example) . Input for this process may originate from one or more of the information elements IE of the ARP broadcast message. For example, the network node may use a preloaded table <router-ip> versus IP configuration to establish the IP configuration, with router IP taken from the ARP broadcast message . Alternatively, the network node 10 may use a preloaded table <router-mac> versus IP configuration, with router IP taken from the ARP broadcast message again. Yet another possibility would use <target-ip> from the ARP broadcast message, a fixed subnet mask and <router-ip> as from the ARP broadcast.

The network node 10 may use calculations for one or more parameters of the IP configuration.

For example, the network node 10 may use a calculated IP address for the network node 10 (e.g. router-ip plus 1 ) and fixed subnet mask. Alternatively, the network node 10 may use last digit(s) of <target-mac> address, as known to the network node 10, to select an IP address derived from <router-ip> as received. As yet another example, the network node 10 may use a pseudo-random IP address derived from <router-ip>. The network node 10 may use address conflict detection mechanisms as described in RCF 5227 (IPv4 Address Conflict Detection), for example.

After the IP configuration determination process, the network node 10 in communication C3 replies to ARP broadcast message from the IP router 20 with the MAC address of the network node 10 as a conventional response to the ARP broadcast message if <target-ip> corresponds to the IP address in the IP configuration determined by the network node 10. If not, communication C3 may be skipped. Optionally, the information element <target-IP> corresponds to the IP address of an IP configuration of another network node (such as network node 10' in FIG. 1) that would respond with an ARP reply message. It is noted that the IP router 20 in this case may still obtain the IP address MAC address of network node 10 after the network node 10 has determined an IP configuration. For example, if the computer COMP sends another data request as in communication C1 with the IP address of network node 10 of the then determined IP configuration for this network node 10, the network node 10 would respond with a conventional ARP reply as in communication C3. As another example, if the network node 10 has established an IP configuration and would need to transmit data (received, for example, from an IoT device as shown in FIG. 2), the network node would send an ARP request to the IP router using the IP address of IP router 20 obtained previously (e.g. with the ARP broadcast in communication C2) and its IP address determined during the IP configuration determination process.

The IP router 20 may store the MAC address of the network node 10, e.g. in an ARP (temporary) cache and send the data request to the network node 10 in communication C4. The network node 10 may respond to the data request in communication C5 which is forwarded to the computer system COMP in communication C6.

It is noted that if multiple network nodes 10 exist behind a single IP node 20, as shown in FIG. 1, the IP configuration determination process in the network nodes should take this into account. For example, the IP configuration determination process may use a calculation partly based on its own unique MAC address.

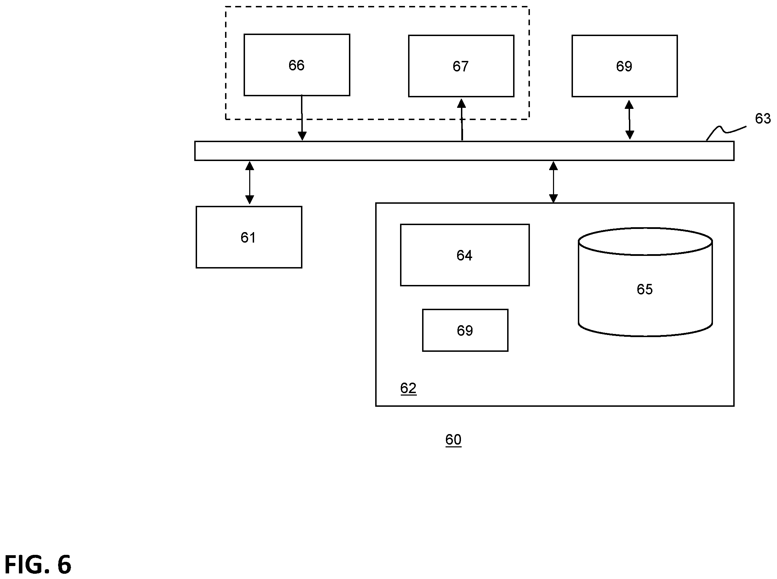

FIG. 6 depicts a block diagram illustrating an exemplary processing system according to a disclosed embodiment, e.g. a (part of a) network node 10, IP node 20 or computer system COMP as described above. As shown in FIG. 6, the processing system 60 may include at least one processor 61 coupled to memory elements 62 through a system bus 63. As such, the processing system may store program code within memory elements 62. Further, the processor 61 may execute the program code accessed from the memory elements 62 via a system bus 63. In one aspect, the processing system may be implemented as a computer system that is suitable for storing and/or executing program code. It should be appreciated, however, that the processing system 60 may be implemented in the form of any system including a processor and a memory that is capable of performing the functions described within this specification.

The memory elements 62 may include one or more physical memory devices such as, for example, local memory 64 and one or more bulk storage devices 65. The local memory may refer to random access memory or other non-persistent memory device(s) generally used during actual execution of the program code. A bulk storage device may be implemented as a hard drive or other persistent data storage device. The processing system 60 may also include one or more cache memories (not shown) that provide temporary storage of at least some program code in order to reduce the number of times program code must be retrieved from the bulk storage device 65 during execution.

Input/output (I/O) devices depicted as an input device 66 and an output device 67 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 6 with a dashed line surrounding the input device 66 and the output device 67). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 68 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 60, and a data transmitter for transmitting data from the processing system 60 to said systems, devices and/or networks. Modems, cable modems, and Ethernet cards are examples of different types of network adapter that may be used with the processing system 60.

As pictured in FIG. 6, the memory elements 62 may store an application 69. In various embodiments, the application 69 may be stored in the local memory 64, the one or more bulk storage devices 65, or apart from the local memory and the bulk storage devices. It should be appreciated that the processing system 60 may further execute an operating system (not shown in FIG. 6) that can facilitate execution of the application 69. The application 69, being implemented in the form of executable program code, can be executed by the processing system 60, e.g., by the processor 61. Responsive to executing the application, the processing system 60 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 61 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A network node configured to determine an Internet Protocol, IP, configuration for an IP network connection, wherein the network node is configured to:
receive an Open Systems Interconnection, OSI, -layer-2 message comprising one or more information elements;
run an IP configuration determination process using one or more of the one or more information elements of the OSl-layer-2 message as input for the IP configuration determination process to determine an IP configuration for the network node to be reachable over the IP network connection.

2. The network node according to claim 1, wherein
the network node is configured to receive the OSl-layer-2 message from a plurality of sender systems, and
the IP configuration determination process is configured to determine a different IP configuration dependent on the sender system of the plurality of sender systems from which the OSI-layer-2 message is received.

3. The network node according to claim 1 or 2, wherein
the OSl-layer-2 message comprises an Address Resolution Protocol, ARP, broadcast message, and
the network node is configured to run the IP configuration determination process to determine at least one of an IPv4 address, a subnet mask and a sender protocol address for the network node using the one or more of the one or more information elements of the ARP broadcast message as input for the IP configuration determination process.

4. The network node according to one or more of the preceding claims, wherein the IP configuration determination process is configured to determine at least one of an IP address, a subnet mask and a sender system address, for the IP configuration of the network node based on one or more information elements of the OSl-layer-2 message.

5. The network node according to claim 4, wherein the network node is configured to determine the subnet mask of the IP configuration from the IP configuration determination process based on at least one of an IP address and a sender system protocol address or sender system hardware address comprised in the OSl-layer-2 message.

6. The network node according to one or more of the preceding claims, wherein the network node is configured to determine an IP address of the IP configuration of the network node via the IP configuration determination process, wherein the IP configuration determination process comprises a calculation process to determine the IP address from one or more of the information elements of the OSl-layer-2 message, wherein the calculation process optionally comprises at least one of:
- calculating the IP address of the network node from a sender system protocol address;
- calculating the IP address of the network node from at least a part of the hardware address of the network node and/or at least a part of a hardware address of the sender system;
- calculating the IP address of the network node pseudo-randomly from the sender system protocol address, wherein, optionally, the network node is configured to execute an address conflict detection process for the pseudo-random calculated IP address.

7. The network node according to one or more of the preceding claims, wherein the network node is configured to run the IP configuration determination process only in response to at least one of:
- detecting at least one of a predetermined sender hardware address and a sender protocol address as an information element in the OSI-layer-2 message; and
- detecting that the network node does not have a valid IP configuration.

8. The network node according to one or more of the preceding claims, wherein the network node is configured to respond to the OSI-layer 2 broadcast message with a response message to the sender system, wherein the response message comprises at least a hardware address of the network node.

9. A network system comprising one or more network nodes according to one or more of the preceding claims and at least one sender system, wherein the sender system comprises at least an IP node, such as an IP router, wherein the IP node is configured to send an OSI-layer-2 message to trigger determination in the one or more network nodes to determine an IP configuration.

10. The network system according to claim 9, wherein the sender system is further configured to run a discovery protocol to discover presence of at least one of network nodes and IP nodes.

11. The network system according to claim 10, wherein the network system comprises the IP node and a remote computer system configured to initiate a data request to the IP node, wherein the remote computer system is configured to run the discovery protocol and to initiate the data request to transmit to the IP node, optionally in response to detecting presence of the IP router.

12. The network system according to one or more of the claims 9-11, wherein the network nodes comprise network nodes attached to a base station infrastructure of a telecommunications network, wherein the network nodes provide a wireless network interface for Internet-of-Things devices and are each connected via an associated IP router to an IP backbone network.

13. A method for determining an Internet Protocol, IP, configuration for an IP network connection of a network node, wherein the method comprises the steps in a network node of:
receiving an Open Systems Interconnection, OSI, -layer-2 message comprising one or more information elements;
using one or more of the one or more information elements of the OSI-layer-2 message to determine an IP configuration for the network node to be reachable over the IP network connection.

14. The method according to claim 13, wherein the OSI-layer-2 message comprises an Address Resolution Protocol, ARP, broadcast message, and the method comprises the step in the network node of:
running an IP configuration determination process to determine at least one of an IPv4 address, a subnet mask and a sender protocol address for the network node using the one or more of the one or more information elements of the ARP broadcast message as input for the IP configuration determination process.

15. The method according to claim 13 or 14, wherein the method further comprises the step in the network node determining at least one of an IP address, a subnet mask and a sender system address, for the IP configuration of the network node based on one or more information elements of the OSl-layer-2 message, wherein the step optionally comprises determining the subnet mask of the IP configuration from the IP configuration determination process based on at least one of an IP address and a sender system protocol address or sender system hardware address comprised in the OSI-layer-2 message.
